# EUROPEAN PATENT SPECIFICATION

(11) **EP 3 719 355 B1**
(45) Date of publication and mention of the grant of the patent: **24.11.2021**
(21) Application number: 20168270.5
(22) Date of filing: 06.04.2020
(51) Int. Cl.: F16H 61/431

(54) **HYDROSTATIC TRANSMISSION FOR A WORK VEHICLE PROVIDED WITH A SYSTEM FOR PREVENTING ENGINE OVER SPEED DURING BRAKING OR REVERSING DOWNHILL**
HYDROSTATISCHES GETRIEBE FÜR EIN ARBEITSFAHRZEUG MIT SYSTEM ZUM VERHINDERN VON MOTOR-ÜBERDREHZAHL BEIM BREMSEN ODER RICHTUNGSWECHSEL AUF EINEM GEFÄLLE
TRANSMISSION HYDROSTATIQUE POUR ENGIN DE TRAVAIL AVEC SYSTÈME DE PROTECTION CONTRE SURVITESSE DU MOTEUR EN PHASE DE FREINAGE OU DE CHANGEMENT DE DIRECTION EN PENTE

(30) Priority: 05.04.2019 IT 201900005150
(43) Date of publication of application: 07.10.2020
(73) Proprietor: CNH Industrial Italia S.p.A., 10135 Torino (IT)
(72) Inventor: Garramone, Adriano, 73100 Lecce (IT); Gravili, Andrea, CAP 73100 Lecce (IT); Liberti, Stefano, 73100 Lecce (IT); Venezia, Antonio, 10153 Torino (IT)
(74) Representative: CNH Industrial IP Department

(56) References cited:
- DE-A1- 4 004 773
- DE-A1-102013 202 385
- US-A- 5 473 895
- US-A1- 2006 150 624
- US-A1- 2010 050 620
- US-A1- 2010 106 382
- US-A1- 2013 256 053

## Description

The present invention relates in general to a work vehicle, such as for example a compact wheel loader, provided with a hydrostatic transmission.

Compact wheel loaders are compact vehicles that have road wheels and carry a working implement, in particular a bucket attached to a lift arm, that is hydraulically powered. The hydraulic pressure required to operate the working implement is produced by a hydraulic pump driven by an internal combustion engine (hereinafter simply referred to as engine) of the vehicle. The same engine is also used to drive the wheels, which are commonly powered by means of a hydrostatic transmission comprising a hydraulic pump driven by the engine and a hydraulic motor for driving the wheels, the hydraulic pump and the hydraulic motor of the hydrostatic transmission being hydraulically connected to each other.

More specifically, the present invention relates to a work vehicle of the above-mentioned type, wherein the motor of the hydrostatic transmission is a hydraulically-controlled variable displacement hydraulic motor, that is a hydraulic motor whose displacement is varied under control of hydraulic control means, while the pump of the hydrostatic transmission is an electronically-controlled variable displacement hydraulic pump, that is a hydraulic pump whose displacement is varied under control of an electronic control unit.

In a work vehicle provided with this kind of hydrostatic transmission, the engine may be subject to over speed during very fast braking or during reversing (i.e. during inversion of the driving direction) downhill, because in such conditions the hydraulic motor of the hydrostatic transmission, driven by the wheels due to the inertia of the vehicle, starts to work as a pump, while the hydraulic pump of the hydrostatic transmission starts to work as a motor, thereby increasing the speed of the engine connected thereto. This phenomenon is very perceivable on compact wheel loaders, as in this kind of vehicles the hydraulic motor of the hydrostatic transmission is controlled by the above-mentioned hydraulic control means in such a way that its displacement increases when the pressure in the hydraulic line connecting the hydraulic motor to the hydraulic pump is higher than a given threshold. Accordingly, the pressure increase in the hydraulic line occurring in case of fast braking or reversing downhill causes an increase in the displacement of the hydraulic motor, which results in an increase in the oil flow from the hydraulic motor to the hydraulic pump and therefore an increase in the speed of the hydraulic pump, as well as in the speed of the engine (as the latter is connected to the hydraulic pump), which may cause damages to the engine. Patent applications US2006150624A1, US2010050620A1, US2010106382A1, DE4004773A1, US5473895A, US2013256053A1, DE102013202385A1 disclose different methods for managing the displacement of the hydraulic motor but still do not reveal a comprehensive solution to reduce the damage to the engine during the above operations.

It is therefore an object of the present invention to overcome the problem discussed above, effectively preventing engine over speed during braking or reversing downhill with a work vehicle provided with a hydrostatic transmission of the aforementioned type.

This and other objects are fully achieved according to the present invention by virtue of a hydrostatic transmission for a work vehicle as set forth in independent claim 1, as well as by a method for controlling a hydrostatic transmission for a work vehicle during braking or reversing downhill as set forth in independent claim 4.

Advantageous embodiments of the invention are defined in the dependent claims, the subject-matter of which is to be intended as forming an integral part of the following description.

In short, the invention is based on the idea of checking the vehicle speed during braking or reversing downhill and preventing the displacement of the hydraulic pump from going to zero as long as the vehicle speed is higher than a given threshold value. In other words, the displacement of the hydraulic pump is reduced during braking or reversing downhill, but the hydraulic pump is not completed closed (i.e. its displacement is not brought to zero) as long as the vehicle speed is higher than the aforementioned threshold value.

The features and advantages of the present invention will become more apparent from the following detailed description, given purely by way of non-limiting example with reference to the appended drawings, where:
Figure 1 shows a compact wheel loader as an example of a work vehicle to which the present invention is applicable;
Figure 2 schematically shows a hydrostatic transmission according to the present invention; and
Figure 3 is a diagram showing an example of evolution over time of the vehicle speed, of the engine speed, of the drive current associated to the forward direction and of the drive current associated to the rearward direction during reversing downhill with a work vehicle provided with a hydrostatic transmission according to the present invention.

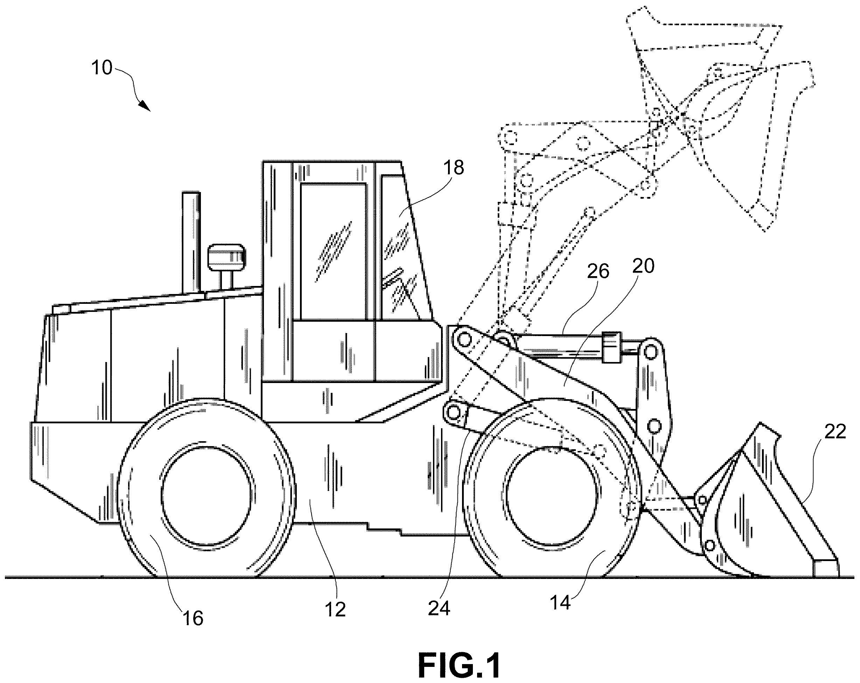

With reference first to Figure 1, a work vehicle is generally indicated at 10. The work vehicle illustrated in Figure 1 is a so-called compact wheel loader. However, the invention is not limited to such kind of work vehicle, but is applicable to any other kind of work vehicle.

In per-se-known manner, the work vehicle 10 comprises a body or frame 12, a pair of front wheels (non-driving wheels) 14, a pair of rear wheels (driving wheels) 16, an operator's cab 18 carried by the body 12, a pair of lift arms 20 (only one of which is shown in Figure 1) attached to the front side of the body 12 and hingedly connected thereto so as to be rotatable about a first axis of rotation directed transversely, a working implement 22, such as for example a bucket, attached to the front ends (free ends) of the lift arms 20 and hingedly connected thereto so as to be rotatable about a second axis of rotation parallel to the first one, a pair of first hydraulic cylinders 24 (only one of which is shown in Figure 1), each of which is interposed between the body 12 and a respective one of the lift arms 20 and is operable to cause rotary movement of the respective lift arm 20 relative to the body 12 about the first axis of rotation, and one or two second hydraulic cylinders 26 interposed between the lift arms 20 and the working implement 22 and operable to cause rotary movement of the working implement 22 relative to the lift arms 20 about the second axis of rotation.

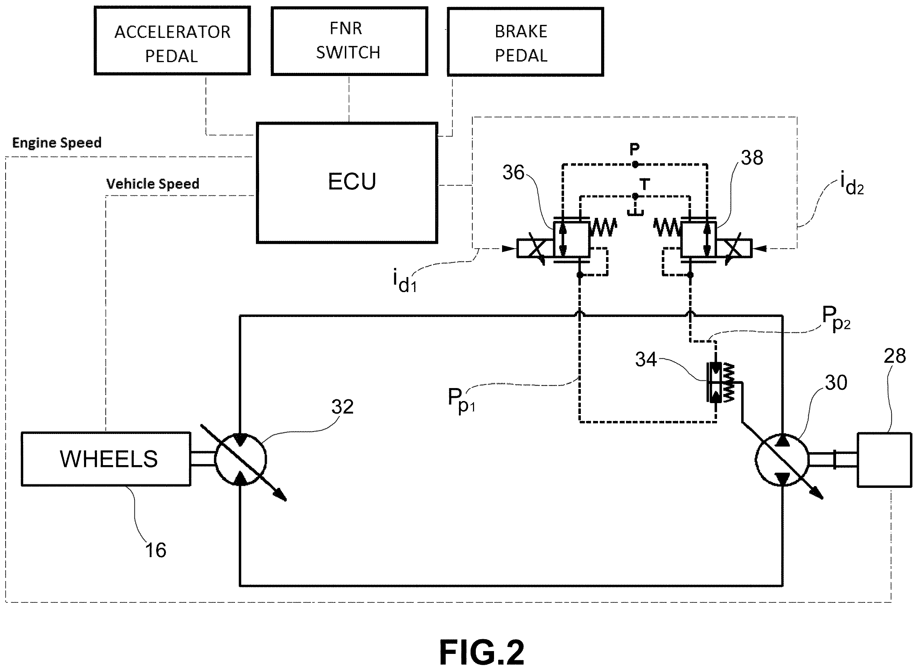

The hydraulic pressure required for the first and second hydraulic cylinders 24 and 26 to operate the lift arms 20 and the working implement 22 is produced by a hydraulic pump (not shown, but of per-se-known type) driven by an internal combustion engine 28 (hereinafter simply referred to as engine) of the vehicle, the engine 28 being schematically shown in figure 2.

As illustrated in Figure 2, the engine 28 is also used to drive the rear wheels 16 by means of a hydrostatic transmission comprising a hydraulic pump 30 and a hydraulic motor 32 hydraulically connected to each other. The hydraulic pump 30 is mechanically connected to the engine 28 to be driven by the same, while the hydraulic motor 32 is mechanically connected to the rear wheels 16 to drive the same.

The hydraulic pump 30 is an electronically-controlled variable displacement hydraulic pump, whose displacement is varied by means of a double acting spool 34 under control of an electronic control unit ECU. To this end, the electronic control unit ECU is configured to generate drive currents i_{d1} and i_{d2} for a pair of solenoid valves 36 and 38, and based on the drive currents i_{d1} and i_{d2} generated by the electronic control unit ECU the solenoid valves 36 and 38 generate in turn pilot pressures pₚ₁ and pₚ₂ for the double acting spool 34. Depending on the pilot pressures pₚ₁ and pₚ₂ generated by the solenoid valves 36 and 38, the double acting spool 34 determines the displacement of the hydraulic pump 30, which may take either positive or negative values, corresponding to the forward and rearward direction of the work vehicle 10, respectively.

On the other hand, the hydraulic motor 32 is a hydraulically-controlled variable displacement hydraulic motor, whose displacement is varied under control of hydraulic control means (not shown, but of per-se-known type).

The electronic control unit ECU is configured to suitably control the solenoid valves 36 and 38, and therefore to suitably control the displacement of the hydraulic pump 30, based on information (coming from suitable sensors connected to the electronic control unit ECU) relating to the position of the accelerator pedal of the vehicle, the position of the brake pedal of the vehicle, the position of a FNR (Forward-Neutral-Reverse) switch of the vehicle, the vehicle speed and the engine speed (i.e. the number of revolutions per minute of the engine 28).

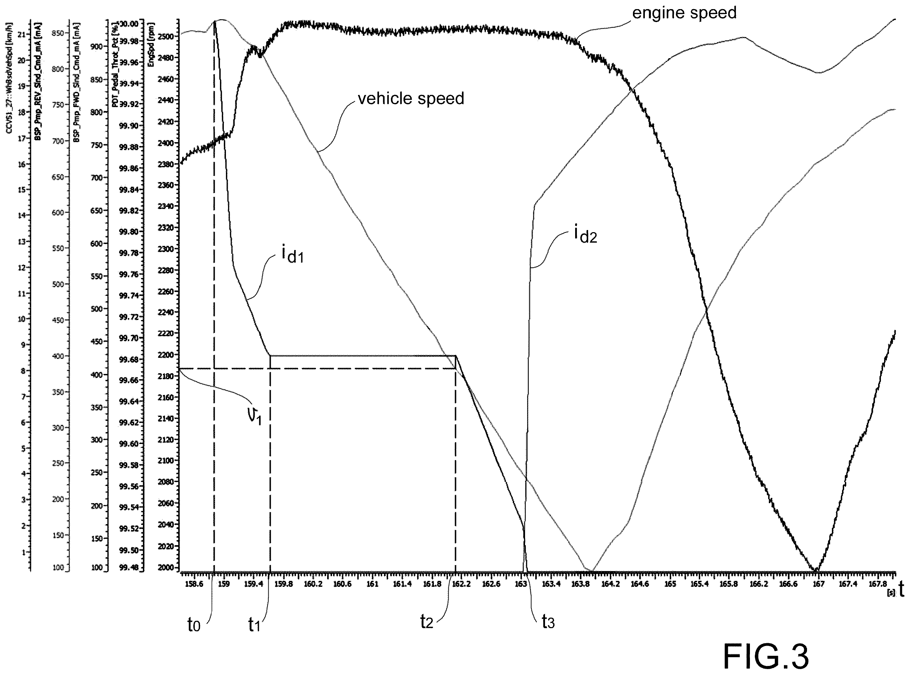

In particular, in order to avoid over speed of the engine during braking or reversing downhill, according to the invention the electronic control unit ECU is configured to control the displacement of the hydraulic pump 30 during such manoeuvres as explained in detail here below with reference to the diagram shown in Figure 3. The following explanation refers to the case of reversing downhill, but similar considerations apply to the case of braking.

When the electronic control unit ECU establishes, from the information relating to the position of the FNR switch, that the vehicle is being reversed (see time t=t₀), it ramps down to a minimum value (for example, zero) the drive current i_{d1} supplied to the solenoid valve 36 associated to the positive range of displacement of the hydraulic pump 30, so as to cause a reduction in the displacement of the hydraulic pump 30, and therefore a reduction in the vehicle speed.

During this phase, the electronic control unit ECU continuously checks the vehicle speed so as not to arrive at a zero displacement condition of the hydraulic pump 30 as long as the vehicle speed is above a given threshold value v₁, In other words, the phase of ramping down to minimum (for example, to zero) the drive current i_{d1} to reduce to zero the displacement of the hydraulic pump 30 is controlled by the electronic control unit ECU taking into account the vehicle speed, in such a manner that the displacement of the hydraulic pump 30 is brought to zero only if the vehicle speed is below the aforementioned threshold value v₁.

In the example shown in Figure 3, the drive current i_{d1} is immediately reduced starting form time t=t₀, i.e. as soon as the electronic control unit ECU establishes that the operator has requested to invert the driving direction. At time t=t₁, since the vehicle speed is still above the threshold value v₁, the reduction in the drive current i_{d1} is stopped or at least continued with a lower decreasing rate (in the example of Figure 3, the drive current i_{d1} is kept constant), while in the meantime the vehicle speed decreases, until the vehicle speed reaches the threshold value v₁ (see time t=t₂). From this time on, the drive current i_{d1} is quickly (i.e. with a high decreasing rate, like the one used in the time interval from t=t₀ to t=t₁) brought to its minimum, so as to bring the displacement of the hydraulic pump 30 to zero. Finally, at time t=t₃ the electronic control unit EUC starts to increase the drive current i_{d2} associated to the negative range of displacement of the hydraulic pump 30, i.e. to the rearward direction of the vehicle.

With such a procedure it is avoided the risk that, with a ramping to zero of the displacement of the hydraulic pump 30 too fast with respect to the reduction in the vehicle speed, the pressure in the hydraulic circuit connecting the hydraulic pump 30 with the hydraulic motor 32 becomes too high, thereby resulting in a dangerous over speed of the hydraulic pump 30, and therefore of the engine 28.

A similar procedure is carried out during braking.

When the electronic control unit ECU establishes, based on the information relating to the position of the brake pedal, that the vehicle is being braked, it ramps down to minimum (for example, zero) the drive current i_{d1} sent to the solenoid valve 36 associated to the positive range of displacement of the hydraulic pump 30. During this phase, the electronic control unit ECU continuously checks the vehicle speed and suitably modulate the drive current i_{d1} of the solenoid valve 36 so as not to arrive at a zero displacement condition of the hydraulic pump 30 until the vehicle speed is below a given threshold value.

By virtue of the present invention, therefore, damages to the engine due to excessive over speed are avoided. This is obtained without the need for special sensors on the transmission, and therefore without increasing the cost of the transmission, but just using the vehicle speed information provided by the vehicle speed sensor (which is already present on board of any work vehicles).

Naturally, the principle of the invention remaining unchanged, the embodiments and the constructional details may vary widely from those described and illustrated purely by way of non-limiting example, without thereby departing from the scope of the invention as defined in the appended claims.

## Claims

1. Hydrostatic transmission for a work vehicle (10), comprising a hydraulic pump (30) and a hydraulic motor (32) hydraulically connected to each other,
wherein the hydraulic pump (30) is arranged to be mechanically coupled to an internal combustion engine (28) of the vehicle (10), and the hydraulic motor (32) is arranged to be mechanically connected to driving wheels (16) of the vehicle (10),
wherein the hydraulic pump (30) is an electronically-controlled variable displacement hydraulic pump, and the hydraulic motor (32) is a hydraulically-controlled variable displacement hydraulic motor,
wherein the hydrostatic transmission further comprises an electronic control unit (ECU) for controlling the operation of the hydrostatic transmission, **characterized in that** the electronic control unit (ECU) is configured to generate drive currents (i_{d1}, i_{d2}) for adjusting the displacement of the hydraulic pump (30) based on information, provided by suitable sensors of the vehicle (10), relating to the position of an accelerator pedal of the vehicle (10), the position of a brake pedal of the vehicle (10), the position of a FNR (Forward-Neutral-Reverse) switch of the vehicle (10), the speed of the vehicle (10) and the speed of the engine (28), and
wherein the electronic control unit (ECU) is programmed in such a manner that when it establishes, based on the information received from said sensors of the vehicle (10), that the vehicle (10) is braking or reversing downhill, it starts to generate suitable drive currents (i_{d1}, i_{d2}) for reducing the displacement of the hydraulic pump (30) to zero, in case of braking, or for bringing the displacement of the hydraulic pump (30) to a negative value passing through zero, in case of reversing downhill, and suitably modulate said drive currents (i_{d1}, i_{d2}) based on the speed of the vehicle (10) so as to prevent the displacement of the hydraulic pump (32) from going to zero as long as the speed of the vehicle (10) is higher than a given threshold value (v₁).

2. Hydrostatic transmission according to claim 1, further comprising a displacement adjustment device (34) associated to the hydraulic pump (30) for adjusting the displacement thereof, and a pair of solenoid valves (36, 38) arranged to receive the drive currents (i_{d1}, i_{d2}) generated by the electronic control unit (ECU) and to generate, depending on said drive currents (i_{d1}, i_{d2}), pilot pressures for controlling the displacement adjustment device (34).

3. Work vehicle (10), in particular compact wheel loader, comprising driving wheels (16), a hydrostatic transmission according to claim 1 or claim 2, and an internal combustion engine (28) for driving said driving wheels (16) through the hydrostatic transmission, wherein said driving wheels (16) are mechanically coupled to the hydraulic motor (32) of the hydrostatic transmission, and wherein the internal combustion engine (28) is mechanically coupled to the hydraulic pump (30) of the hydrostatic transmission.

4. Method for controlling a hydrostatic transmission for a work vehicle (10) during braking or reversing downhill, wherein the hydrostatic transmission comprises an electronically-controlled variable displacement hydraulic pump (30) and a hydraulically-controlled variable displacement hydraulic motor (32) hydraulically connected to each other, the hydraulic pump (30) being arranged to be mechanically coupled to an internal combustion engine (28) of the vehicle (10) and the hydraulic motor (32) being arranged to be mechanically connected to driving wheels (16) of the vehicle (10),
the method comprising the steps of:
a) establishing whether a braking or reversing downhill manoeuvre has been started and, in the affirmative,
b) reducing the displacement of the hydraulic pump (30) and, at the same time, monitoring the vehicle speed, bringing the displacement of the hydraulic pump (30) to zero, in case of braking, or bringing the displacement of the hydraulic pump (30) to a negative value passing through zero, in case of reversing downhill, provided the vehicle speed is below a given threshold value (v₁).

5. Method according to claim 4, wherein during said step b) the displacement of the hydraulic pump (30) is varied by generating suitable drive currents (i_{d1}, i_{d2}) for a pair of solenoid valves (36, 38) arranged to generate, depending on said drive currents (i_{d1}, i_{d2}), pilot pressures for controlling a displacement adjustment device (34) associated to the hydraulic pump (30).

## Patentansprüche

1. Hydrostatisches Getriebe für ein Arbeitsfahrzeug (10), das eine Hydraulikpumpe (30) und einen Hydraulikmotor (32) aufweist, die miteinander hydraulisch verbunden sind,
wobei die Hydraulikpumpe (30) so angeordnet ist, dass sie mit einem Verbrennungsmotor (28) des Fahrzeugs (10) mechanisch gekoppelt ist, und wobei der Hydraulikmotor (32) so angeordnet ist, dass er mechanisch mit Antriebsrädern (16) des Fahrzeugs (10) verbunden ist,
wobei die Hydraulikpumpe (30) eine elektronisch gesteuerte hydraulische Verstellpumpe ist, und wobei der Hydraulikmotor (32) ein hydraulisch gesteuerter hydraulischer Verstellmotor ist,
wobei das hydrostatische Getriebe desweiteren eine elektronische Steuerungseinheit (ECU) zur Steuerung des Betriebs des hydrostatischen Getriebes aufweist,
**dadurch gekennzeichnet, dass**
die elektronische Steuerungseinheit (ECU) dazu eingerichtet ist, um Ansteuerströme (i_{d1}, i_{d2})zu generieren, um die Verschiebung der Hydraulikpumpe (30) basierend auf Daten einzustellen, die durch geeignete Sensoren des Fahrzeugs (10) bereitgestellt werden, die die Position eines Gaspedals des Fahrzeugs (10), die Position eines Bremspedals des Fahrzeugs (10), die Position eines Fahrtrichtungsschalters (Forward-Neutral-Reverse; FNR) des Fahrzeugs (10), die Geschwindigkeit des Fahrzeugs (10) und die Geschwindigkeit des Motors (28) betreffen, und
wobei die elektronische Steuerungseinheit (ECU) so programmiert ist, dass, wenn sie basierend auf den Daten, die von den Sensoren des Fahrzeugs (10) aufgenommen wurden, dass das Fahrzeug (10) bremst oder bergab rückwärts fährt, einen passenden Ansteuerstrom (i_{d1}, i_{d2})generiert, um die Verschiebung in der Hydraulikpumpe (30) auf Null zu reduzieren, falls gebremst wird, oder die Verschiebung der Hydraulikpumpe (30) auf einen negativen Wert mit einem Durchgang durch die Null zu bringen, falls bergab rückwärts gefahren wird, und entsprechend die Ansteuerströme (i_{d1}, i_{d2})basierend auf der Geschwindigkeit des Fahrzeugs (10) moduliert, sodass verhindert wird, dass die Verschiebung der Hydraulikpumpe (32) auf Null geht, solange die Geschwindigkeit des Fahrzeugs (10) höher als ein vorgegebener Grenzwert (v₁) ist.

2. Hydrostatisches Getriebe nach Anspruch 1, das des Weiteren eine Verschiebungseinstellungseinrichtung (34), die mit der Hydraulikpumpe (30) in Verbindung steht, um deren Verschiebung anzupassen, und ein Paar Magnetventile (36, 38) aufweist, die dazu ausgebildet sind, um die Ansteuerströme (i_{d1}, i_{d2})zu empfangen, die durch die elektronische Steuerungseinrichtung (ECU) generiert werden, und um, abhängig von den Ansteuerströmen (i_{d1}, i_{d2}), Pilotdrücke zu generieren, um die Verschiebungseinstellungseinrichtung (34) zu steuern.

3. Arbeitsfahrzeug (10), insbesondere Radlader, das Antriebsräder (16), ein hydrostatisches Getriebe nach Anspruch 1 oder Anspruch 2, und einen Verbrennungsmotor (28) aufweist, um die Antriebsräder (16) durch das hydrostatische Getriebe anzutreiben, wobei die Antriebsräder (16) mechanisch mit dem Hydraulikmotor (32) des hydrostatischen Getriebes gekoppelt sind, und wobei der Verbrennungsmotor (28) mechanisch mit der Hydraulikpumpe (30) des hydrostatischen Getriebes gekoppelt ist.

4. Verfahren zur Steuerung eines hydrostatischen Getriebes eines Arbeitsfahrzeuges (10) während des Bremsens oder des bergab Rückwärtsfahrens, wobei das hydrostatische Getriebe eine elektronisch-gesteuerte hydraulische Verstellpumpe (30) und einen hydraulisch-gesteuerten hydraulischen Verstellmotor (32) aufweist, die hydraulisch miteinander verbunden sind, wobei die Verstellpumpe (30) ausgebildet ist, um mechanisch mit dem Verbrennungsmotor (28) des Fahrzeugs (10) gekoppelt zu werden und der Verstellmotor (32) ausgebildet ist, um mechanisch mit den Antriebsrädern (16) des Fahrzeugs (10) verbunden zu werden,
wobei das Verfahren folgende Schritte aufweist:
a) Erfassen, ob ein Bremsvorgang oder ein bergab gerichteter Rückwärtsfahrvorgang gestartet wurde und, wenn dies der Fall ist,
b) Reduzieren der Verschiebung der Hydraulikpumpe (30) und gleichzeitiges Überwachen der Fahrzeuggeschwindigkeit, Einstellen der Verschiebung der Hydraulikpumpe (30) auf Null, falls gebremst wird, oder Einstellen der Verschiebung der Hydraulikpumpe (30) auf einen negativen Wert mit einem Durchgang durch die Null, falls bergab rückwärts gefahren wird, vorausgesetzt, dass die Fahrzeuggeschwindigkeit unter einem vorgegebenen Grenzwert (v₁) liegt.

5. Verfahren nach Anspruch 4, wobei während des Schrittes b) die Verschiebung der Hydraulikpumpe (30) variiert wird, indem entsprechende Ansteuerströme (i_{d1}, id₂) für ein Paar Magnetventile (36, 38) generiert werden, die dazu ausgebildet sind, um in Abhängigkeit von den Ansteuerströmen (i_{d1}, i_{d2})Pilotdrücke zu generieren, um eine Einrichtung zum Einstellen der Verschiebung (34) zu steuern, die mit der Hydraulikpumpe (30) in Verbindung steht.

## Revendications

1. Transmission hydrostatique pour véhicule de travail (10), comprenant une pompe hydraulique (30) et un moteur hydraulique (32) reliés de manière hydraulique l'un à l'autre,
dans laquelle la pompe hydraulique (30) est agencée pour être couplée mécaniquement à un moteur à combustion interne (28)du véhicule (10), et le moteur hydraulique (32) est agencé pour être relié mécaniquement aux roues motrices (16) du véhicule (10),
dans laquelle la pompe hydraulique (30) est une pompe hydraulique à cylindrée variable à commande électronique, et le moteur hydraulique (32) est un moteur hydraulique à cylindrée variable à commande hydraulique,
dans laquelle la transmission hydrostatique comprend en outre une unité de commande électronique (ECU) destinée à commander le fonctionnement de la transmission hydrostatique,
**caractérisée en ce que**
l'unité de commande électronique (ECU) est configurée pour générer des courants d'attaque (i_{dl},i_{d2}) pour ajuster la cylindrée de la pompe hydraulique (30) sur la base d'informations, fournies par des capteurs appropriés du véhicule (10), concernant la position d'une pédale d'accélérateur du véhicule (10), la position d'une pédale de frein du véhicule (10), la position d'un commutateur position marche avant - point mort - marche arrière du véhicule (10), la vitesse du véhicule (10) et la vitesse du moteur (28), et
dans laquelle l'unité de commande électronique (ECU) est programmée de manière à ce que, lorsqu'elle établit, sur la base des informations reçues par lesdits capteurs du véhicule (10), le fait que le véhicule (10) freine ou fait marche arrière en descente, elle commence à générer des courants d'attaque appropriés (i_{dl},i_{d2}) pour réduire la cylindrée de la pompe hydraulique (30) à zéro, en cas de freinage, ou pour faire passer la cylindrée de la pompe hydraulique (30) à une valeur négative passant par zéro, en cas de marche arrière en descente, et moduler de manière appropriée lesdits courants d'attaque (i_{dl},i_{d2}) sur la base de la vitesse du véhicule (10) de manière à prévenir que la cylindrée de la pompe hydraulique (30) passe à zéro tant que la vitesse du véhicule (10) est supérieure à une certaine valeur seuil (V₁).

2. Transmission hydrostatique selon la revendication 1, comprenant en outre un dispositif d'ajustement de la cylindrée (34) associé à la pompe hydraulique (30) pour ajuster la cylindrée de celle-ci, et deux vannes électromagnétiques (36, 38) agencées pour recevoir les courants d'attaque (i_{d1}, id₂) générés par l'unité de commande électronique (ECU) et pour générer, en fonction desdits courants d'attaque (i_{d1}, i_{d2}), des pressions pilotes pour commander le dispositif d'ajustement de la cylindrée (34).

3. Véhicule de travail (10), en particulier un chargeur sur pneus compact, comprenant des roues motrices (16), une transmission hydrostatique selon la revendication 1 ou la revendication 2, et un moteur à combustion interne (28) pour entraîner lesdites roues motrices (16) par le biais de la transmission hydrostatique, dans lequel lesdites roues motrices (16) sont reliées mécaniquement au moteur hydraulique (32) de la transmission hydrostatique, et dans lequel le moteur à combustion interne (28) est relié mécaniquement à la pompe hydraulique(30) de la transmission hydrostatique.

4. Procédé de commande d'une transmission hydrostatique pour véhicule de travail (10) durant le freinage ou la marche arrière en descente, dans lequel la transmission hydrostatique comprend une pompe hydraulique à cylindrée variable à commande électronique (30) et un moteur hydraulique à cylindrée variable à commande hydraulique (32) reliés de manière hydraulique l'un à l'autre, la pompe hydraulique (30) étant agencée afin d'être couplée mécaniquement à un moteur à combustion interne (28) du véhicule (10) et le moteur hydraulique (32) étant agencé pour être relié mécaniquement aux roues motrices (16) du véhicule (10),
le procédé comprenant les étapes consistant à :
a) déterminer si une manœuvre de freinage ou de marche arrière en descente a été initiée et, dans l'affirmative,
b) réduire la cylindrée de la pompe hydraulique (30) et, en même temps, surveiller la vitesse du véhicule,
faire passer la cylindrée de la pompe hydraulique (30) à zéro, en cas de freinage, ou faire passer la cylindrée de la pompe hydraulique (30) à une valeur négative passant par zéro, en cas de marche arrière en descente, à condition que la vitesse du véhicule soit inférieure à une certaine valeur seuil (v1).

5. Procédé selon la revendication 4, dans lequel lors de ladite étape b) la cylindrée de la pompe hydraulique (30) varie en générant des courants d'attaque appropriés (i_{dl}, i_{d2}) pour deux vannes électromagnétiques(36, 38) agencées pour générer, en fonction desdits courants d'attaque (i_{dl}, id₂), des pressions pilotes pour commander un dispositif d'ajustement de la cylindrée (34) associé à la pompe hydraulique (30).
